# FASCICULE DE BREVET EUROPEEN

(11) **EP 0 635 742 B1**
(45) Date de publication et mention de la délivrance du brevet: **28.04.1999**
(21) Numéro de dépôt: 94401261.6
(22) Date de dépôt: 07.06.1994
(51) Int. Cl.: G02B 23/12

(54) **Dispositif optique compact pour la vision nocturne et son application à des lunettes**
Kompaktes optisches Nachtsichtgerät und seine Anwendung als Feldstecher
Compact night vision optical device and its application to goggles

(30) Priorité: 11.06.1993 FR 9307047
(43) Date de publication de la demande: 25.01.1995
(73) Titulaire: SEXTANT AVIONIQUE, 92360 Meudon-la-Forêt (FR)
(72) Inventeur: Francois, Jean-Michel, F-92402 Courbevoie Cédex (FR); Jolly, Patrick, F-92402 Courbevoie Cédex (FR); Lefort, Yves, F-92402 Courbevoie Cédex (FR)
(74) Mandataire: Benoit, Monique

(56) Documents cités:
- WO-A-89/04008
- FR-A- 2 665 267

## Description

L'invention concerne un dispositif optique compact permettant de superposer à l'image visible une seconde image provenant d'un dispositif à intensification de lumière, permettant la vision nocturne.

Un tel dispositif est notamment applicable à la constitution de lunettes pouvant être portées sous la visière d'un casque de pilote d'avion ou d'hélicoptère ou pour un fantassin par exemple, lui permettant d'observer le paysage de jour comme de nuit.

De telles lunettes sont par exemple décrites dans la demande de brevet PCT WO 89/04008. Elles comportent principalement, pour chaque oeil du pilote, un circuit optique pour la lumière directement visible par le pilote, un circuit d'intensification permettant d'intensifier la lumière infrarouge émise par une scène nocturne et de la convertir en lumière visible par l'oeil du pilote, et enfin un mélangeur optique permettant de combiner ces circuits et de diriger les deux images qu'ils produisent vers l'oeil du pilote.

Les difficultés qui surviennent avec ce type de matériel sont, d'une part, sa masse, qui est un inconvénient évident pour le pilote et son volume, qui peuvent conduire à l'obligation d'utiliser des casques spéciaux dont la visière est particulièrement écartée du visage du pilote pour permettre l'insertion des lunettes, l'un et l'autre pouvant en outre poser des problèmes en cas d'éjection du pilote, et, d'autre part, l'éventuelle insuffisance de l'intensité lumineuse de l'image nocturne.

L'invention a pour objet un dispositif optique permettant également la vision nocturne, dont masse et volume sont réduits et dont le rendement optique est amélioré.

A cet effet, le dispositif optique pour la vision nocturne, selon l'invention, est défini par la revendication 1. Son application à des lunettes de vision nocturne est définie par la revendication 8.

D'autres objets, particularités et résultats de l'invention ressortiront de la description suivante, donnée à titre d'exemple et illustrée par les dessins annexés, qui représentent :
- les figures 1a, 1b, et 1c, des schémas vus de face, de profil et de dessus d'un mode de réalisation du dispositif selon l'invention ;
- la figure 2, une variante de réalisation de la figure 1c;
- la figure 3, un mode de réalisation d'une partie du dispositif illustré sur la figure 1a ;
- les figures 4a, 4b, 4c et 4d, différentes vues d'un mode de réalisation de lunettes de vision nocturne réalisées selon l'invention.

Sur ces différentes figures, les mêmes références se rapportent aux mêmes éléments.

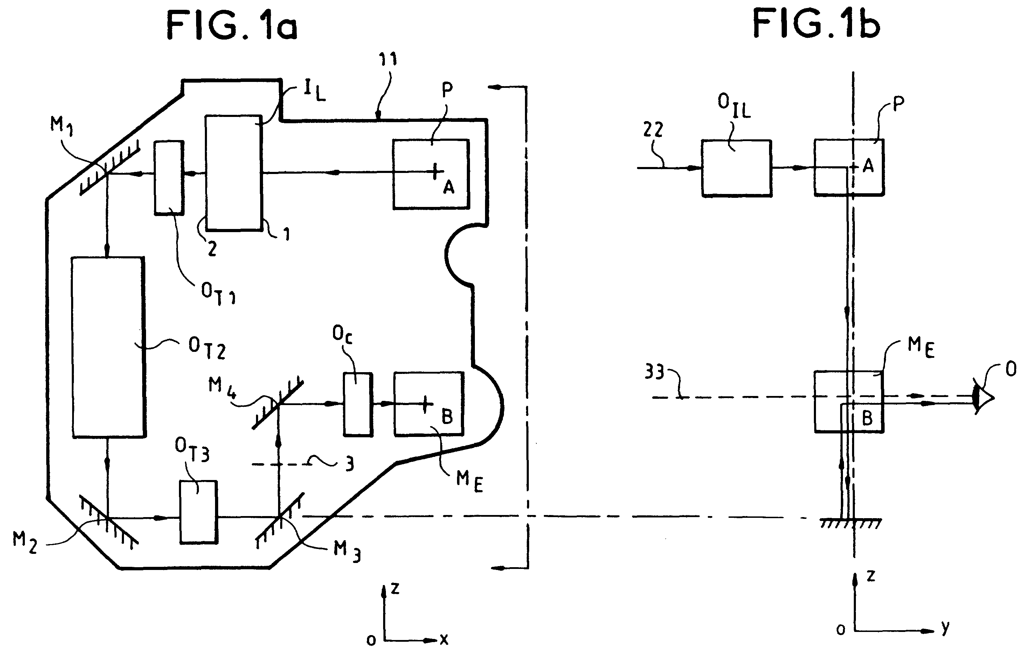

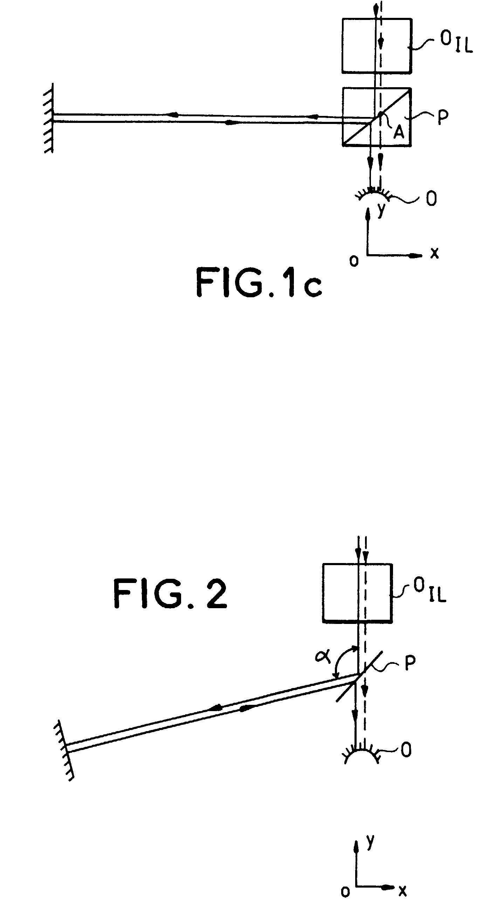

La figure 1a est donc un schéma vu de face, dans un plan XOZ, du dispositif de vision noctume selon l'invention, alors que la figure 1b est un schéma vu de profil, c'est-à-dire dans un plan ZOY normal au précédent, et la figure 1c, une vue de dessus dans un plan XOY, également normal aux précédents, de ce même dispositif.

Le dispositif, globalement repéré 11 sur la figure 1a, est relatif à un seul oeil de l'observateur (du pilote), par exemple l'oeil gauche sur les figures, l'oeil, repéré O, étant sur la figure 1a situé devant le point B, en avant du plan de la figure.

La lumière infrarouge 22 provenant d'un paysage nocturne observé, c'est-à-dire les longueurs d'onde comprises dans la bande spectrale 0,7 à 1µm, est reçue par un objectif O_{IL} du type objectif de prise de vues. Cet objectif O_{IL} est destiné à former une image du paysage à l'infini, ou à une distance finie s'il existe un réglage de focalisation, sur la face d'entrée 1 d'un dispositif IL (face 1 du dispositif IL confondue avec le plan focal image de l'objectif O_{IL}). transformant la lumière infrarouge reçue en lumière visible avec intensification, tel qu'un tube intensificateur de lumière. L'objectif O_{IL} est disposé de préférence au-dessus de l'oeil du pilote, sur un axe parallèle à OZ. La lumière infrarouge 22 puis la lumière visible obtenue par l'intensification de cette lumière infrarouge est illustrée en traits continus ; elle est reçue par le dispositif de l'invention selon un axe OY et elle est renvoyée dans le plan XOZ selon la direction OX par un dispositif P (point A), réalisé par exemple à l'aide d'un miroir ou, de préférence, d'un prisme de renvoi, ce qui permet de diminuer l'encombrement de l'objectif O_{IL}.

Un circuit optique permet de guider la lumière issue de l'intensificateur IL, dans le plan XOZ, jusqu'à un mélangeur M_{E} (point B) situé devant l'oeil de l'observateur. Ce mélangeur M_{E} permet d'une part de réfléchir la lumière intensifiée 22 dans la direction OY vers l'oeil O de l'observateur; il est d'autre part transparent à la lumière visible 33 (représentée en traits pointillés) provenant du paysage à l'infini selon la direction OY. Le mélangeur M_{E} peut être classiquement constitué de deux prismes rectangles accolés, dont la face commune (non visible sur les figures) forme un miroir semi-transparent, ou dichroïque ou holographique.

Le circuit optique de guidage est formé d'un objectif de transport O_{T}, par exemple constitué de trois parties O_{T1}, O_{T2} et O_{T3}, rendu nécessaire par le fait que le trajet optique pour amener l'image intensifiée devant l'oeil est long, d'un oculaire O_{C} pour rejeter l'image reçue à l'infini, situé devant le mélangeur M_{E}, et de quatre miroirs M₁, M₂, M₃ et M₄, qui sont disposés de sorte à renvoyer chacun la lumière à 90° de sa direction incidente.

Il apparaît donc que l'oeil de l'observateur O reçoit, d'une part, directement la lumière visible 33 parallèlement à la direction OY et, d'autre part, la lumière infrarouge 22, reçue également parallèlement à la direction OY, après intensification et conversion dans un circuit optique disposé selon le plan XOZ.

Dans ce mode de réalisation, le circuit de guidage de la lumière infrarouge intensifiée et convertie est disposé dans un plan parallèle au plan XOZ, normal à la direction OY du rayonnement incident.

La figure 2 représente une variante de réalisation du dispositif selon l'invention, dans laquelle ce circuit de guidage est toujours disposé dans un plan mais celui-ci n'est plus perpendiculaire à la direction OY incidente: il fait un angle α avec la direction OY, supérieur à 90°, par exemple de l'ordre de 110°.

Cette disposition a pour but de diminuer l'encombrement du dispositif lorsqu'il est destiné à former des lunettes disposées sous la visière d'un casque de pilote, celles-ci pouvant alors suivre de plus près la forme du visage.

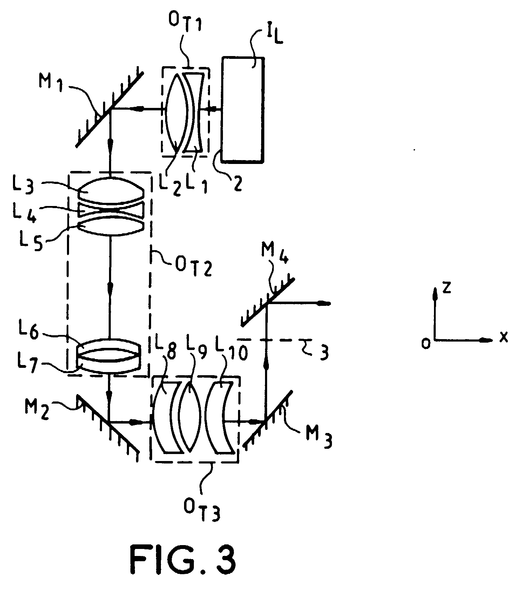

La figure 3 représente un mode de réalisation de la partie du dispositif selon l'invention qui contient l'objectif de transport.

Sur cette figure, on a représenté l'intensificateur de lumière IL et les différentes lentilles constituant les différentes parties O_{T1}, O_{T2}, O_{T3} de l'objectif de transport. Ces lentilles sont définies et disposées de telle sorte que l'image formée sur la face de sortie 2 de l'intensificateur de lumière IL, face 2 qui coïncide donc avec le plan focal objet de l'objectif de transport, soit transportée vers un second plan 3, plan focal image de l'objectif, qui, lui-même, coïncide avec le plan focal objet de l'oculaire O_{C}.

Dans ce mode de réalisation, une première partie O_{T1} de l'objectif de transport est formée de deux lentilles L₁ et L₂ ; la lumière qui est issue de la lentille L₂ selon l'axe OX est réfléchie par le miroir M₁ selon l'axe OZ et vient frapper un premier groupe de trois lentilles L₃, L₄, L₅ d'une deuxième partie O_{T2} de l'objectif, puis un second groupe de deux lentilles L₆ et L₇ de cette même partie. Le miroir M₂ renvoie la lumière issue de la lentille L₇ dans la direction OX où elle rencontre un groupe de trois lentilles L₈, L₉ et L₁₀, formant la dernière partie O_{T3} de l'objectif de transport. Le miroir M₃ renvoie la lumière issue de la lentille L₁₀ dans la direction OZ vers le miroir M₄ qui la renvoie, lui, dans la direction OY vers l'oculaire et le mélangeur M_{E}. Le plan focal 3 est, dans ce mode de réalisation, situé entre les miroirs M₃ et M₄.

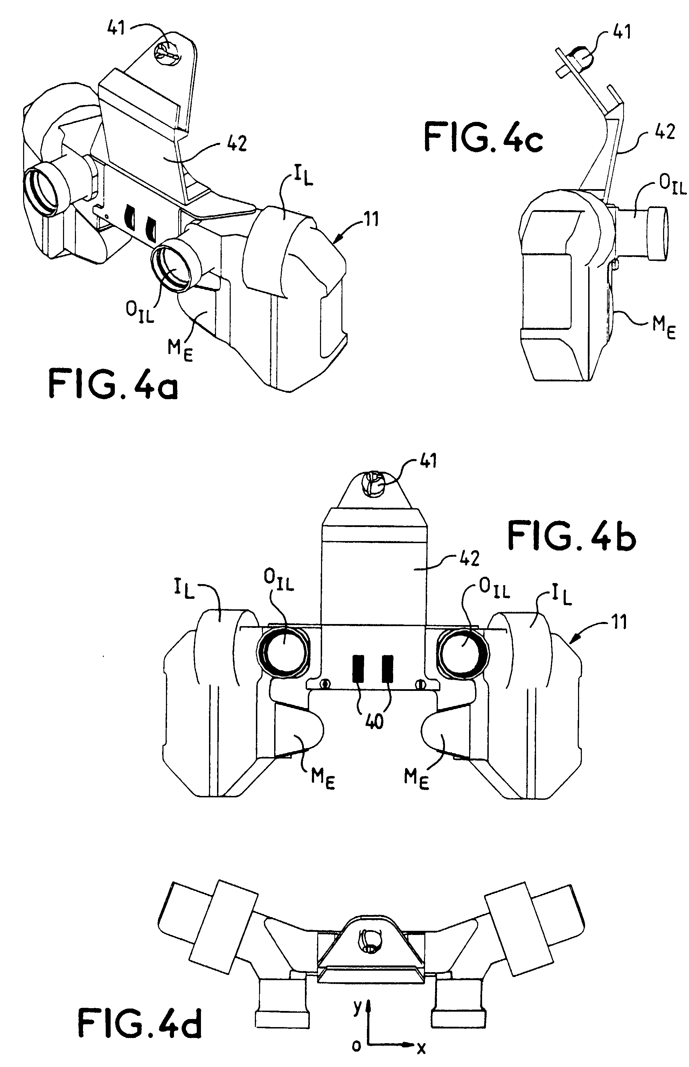

Les figures 4a, 4b, 4c et 4d représentent un mode de réalisation de lunettes de vision nocturne utilisant deux dispositifs tels que décrits précédemment, ces lunettes étant vues respectivement en perspective, de face, de profil et de dessus.

On trouve sur ces différentes figures deux mélangeurs M_{E} disposés respectivement devant les deux yeux du pilote, les mélangeurs recevant la lumière visible provenant du paysage selon la direction OY, et deux objectifs O_{IL} destinés à capter le rayonnement infrarouge issu du paysage selon cette même direction OY. Chacun des dispositifs selon l'invention est inséré dans un boîtier 11, à l'exception des objectifs O_{IL}, les intensificateurs d'images IL faisant saillie. Les lunettes comportent également une structure mécanique centrale 42, comportant des moyens 41 de fixation de l'ensemble au casque du pilote.

Enfin, elles comportent classiquement des moyens de réglage 40, du type mollette, de la distance interoculaire. Selon une variante de réalisation préférée, le réglage est opéré à l'aide de deux molettes distinctes, comme représenté sur les figures 4, chacune agissant sur l'un des ensembles 11. Cette dernière variante permet de translater chacun des ensembles 11 selon son propre plan, qui fait un angle α avec la direction OY, et par là de limiter encore l'encombrement des lunettes.

Sur la vue de dessus de la figure 4d, il apparaît que ce mode de réalisation utilise la variante illustrée figure 2.

Il a été ainsi décrit un dispositif optique pour la vision nocturne très compact, et tout particulièrement ne nécessitant pas de dispositif supplémentaire de rotation d'image.

En effet, ainsi qu'il est connu, d'une part les dispositifs optiques du type objectif inversent les images qu'ils forment (rotation de 180°); d'autre part, les repliements multiples des circuits optiques dans un espace limité peuvent amener également des rotations d'images. Il est connu de compenser ces diverses rotations à l'aide d'un (ou plusieurs) dispositif de rotation d'image, chacun étant formé d'un faisceau de fibres optiques torsadées.

Selon l'invention, le circuit optique est conçu pour éviter l'utilisation d'un tel faisceau de fibres, ce résultat étant atteint en maintenant le circuit optique, entre le prisme P et le mélangeur M_{E}, dans un même plan qui ne contient pas la direction OY d'arrivée des rayons 22 et 33 (ce plan n'étant pas nécessairement perpendiculaire à la direction OY), et en disposant dans ce plan un nombre n de miroirs de renvoi, n dépendant du nombre d'objectifs utilisé dans le dispositif; dans le mode de réalisation décrit ici, on utilise deux objectifs (O_{IL} et O_{T}), ce qui conduit à un nombre pair de miroirs. Bien entendu, en tant que besoin, il est possible d'ajouter un objectif de transport supplémentaire, le nombre de miroirs étant alors impair. Il est à noter que les positions relatives des miroirs, de l'objectif de transport et de l'intensificateur de lumière sont interchangeables, le seul critère étant la recherche de la compacité. Il en est de même pour la direction de renvoi de chacun des miroirs, qui n'est pas nécessairement normale à la direction incidente mais qui doit toutefois rester dans le même plan.

Enfin, ce pliage préférentiel pour le circuit optique entre les éléments P et M_{E} permet de rapprocher l'objectif O_{IL} de l'oeil et ainsi de ne pas avoir d'effet de parallaxe important entre la perception directe (lumière 33) et celle donnée par l'intensificateur de lumière IL (lumière 22).

En outre, le fait d'éviter l'utilisation d'un faisceau de fibres optiques permet d'éviter une substantielle diminution du rendement optique. En effet, la transmission d'un tel système de fibres est faible (environ 50%). Or le facteur de transmission est prépondérant pour les besoins opérationnels où un gain maximum est recherché. Enfin, l'économie d'un faisceau de fibre est également important dans le bilan de masse du système.

## Revendications

1. Dispositif optique de vision nocturne d'un paysage, comportant un mélangeur (M_{E}) et des moyens (IL) pour former une image visible intensifiée à partir d'une image infrarouge reçue, le dispositif étant caractérisé par le fait que le mélangeur est situé selon une première direction (33) devant l'oeil (O) de l'observateur et transmet directement la lumière visible (33) à l'observateur, le dispositif comportant en outre :
• un objectif (O_{IL}) recevant la lumière infrarouge (22) selon une deuxième direction (22), parallèle à la première, les première et deuxième directions définissant un premier plan (YOZ) ;
• des moyens optiques pour guider la lumière reçue par l'objectif vers le mélangeur, le guidage s'effectuant dans un deuxième plan, ce deuxième plan faisant avec le premier plan un angle (α) différent de 90°, ces moyens optiques de guidage comportant :
- des moyens optiques de renvoi de la lumière reçue par l'objectif vers le deuxième plan ;
- les moyens (IL) recevant la lumière infrarouge captée par l'objectif ;
- un objectif de transport ( (O_{T1}, O_{T2}, O_{T3}) ;
- un nombre n de miroirs (M₁, M₂, M₃, M₄), n dépendant du nombre d'objectifs du dispositif;
- un oculaire (O_{C}) ;
la première direction (33) rencontrant le deuxième plan en un premier point (B) et la deuxième direction (22) rencontrant le deuxième plan en un deuxième point (A), la ligne joignant les premier et deuxième points étant perpendiculaire à la première direction, le mélangeur assurant la réflexion de l'image issue de l'oculaire selon la première direction, vers l'oeil de l'observateur.

2. Dispositif selon la revendication 1, caractérisé par le fait que ledit angle entre les premier et deuxième plan est de l'ordre de 110°.

3. Dispositif selon l'une des revendications précédentes, caractérisé par le fait que le nombre n de miroirs est pair.

4. Dispositif selon l'une des revendications précédentes, caractérisé par le fait que le nombre n de miroirs est égal à quatre.

5. Dispositif selon l'une des revendications précédentes, caractérisé par le fait qu'il comporte en outre des moyens optiques de renvoi (P) de la lumière infrarouge issue de l'objectif vers les moyens pour former une image visible intensifiée.

6. Lunettes de vision nocturne, caractérisées par le fait qu'elles comportent deux dispositifs selon l'une des revendications précédentes, un dispositif pour chaque oeil de l'observateur, et des moyens de réglage (40) de la distance interoculaire.

7. Lunettes selon la revendication 6, caractérisées par le fait que les moyens de réglage de la distance interoculaire assurent la translation de chacun des dispositifs selon un axe contenu dans le plan des moyens de guidage.

## Patentansprüche

1. Nachtsichtvorrichtung mit einem Mischorgan (M_{E}) und Mitteln (I_{L}) zur Erzeugung eines verstärkten, sichtbaren Bilds ausgehend von einem empfangenen Infrarotbild, dadurch gekennzeichnet, daß das Mischorgan gemäß einer ersten Richtung (33) vor dem Auge (O) des Beobachters liegt und das sichtbare Licht (33) unmittelbar zum Beobachter überträgt, und daß das Gerät weiter aufweist:
• ein Objektiv (O_{IL}), das das Infrarotlicht (22) gemäß einer zweiten Richtung (22) parallel zur ersten empfängt, wobei die erste und die zweite Richtung eine erste Ebene (YOZ) definieren,
• optische Mittel zur Führung des vom Objektiv empfangenen Lichts zum Mischorgan, wobei die Führung in einer zweiten Ebene erfolgt, die mit der ersten Ebene einen Winkel (α) ungleich 90° einschließt und wobei diese optischen Führungsmittel aufweisen:
- optische Umlenkmittel, um das vom Objektiv empfangene Licht zur zweiten Ebene umzulenken,
- Mittel (I_{L}) zum Empfang des Infrarotbilds, das vom Objektiv aufgefangen wird,
- ein Transportobjektiv (O_{T1}, O_{T2}, O_{T3}),
- n Spiegel (M₁, M₂, M₃, M₄), wobei n von der Anzahl von Objektiven der Vorrichtung abhängt,
- ein Okular (O_{C}),
wobei die erste Richtung (33) die zweite Ebene in einem ersten Punkt (B) trifft und die zweite Richtung (22) die zweite Ebene in einem zweiten Punkt (A) trifft und die die beiden Punkte verbindende Linie senkrecht zur ersten Richtung verläuft und wobei das Mischorgan die Reflexion des vom Okular gemäß der ersten Richtung ausgehenden Bilds zum Auge des Beobachters bewirkt.

2. Vorrichtung nach Anspruch 1, dadurch gekennzeichnet, daß der Winkel zwischen der ersten und der zweiten Ebene bei etwa 110 liegt.

3. Vorrichtung nach einem der vorhergehenden Ansprüche, dadurch gekennzeichnet, daß die Anzahl n von Spiegeln geradzahlig ist.

4. Vorrichtung nach einem der vorstehenden Ansprüche, dadurch gekennzeichnet, daß die Anzahl n von Spiegeln vier beträgt.

5. Vorrichtung nach einem der vorstehenden Ansprüche, dadurch gekennzeichnet, daß es weiter optische Umlenkmittel (P) für das vom Objektiv kommende Infrarotlicht zu den Mitteln aufweist, die ein sichtbare, verstärktes Bild erzeugen.

6. Feldstecher, dadurch gekennzeichnet, daß er zwei Vorrichtungen gemäß einem der vorstehenden Ansprüche, und zwar eine für jedes Auge des Beobachters, sowie Mittel (40) zur Regelung des Augenabstands besitzt.

7. Feldstecher nach Anspruch 6, dadurch gekennzeichnet, daß die Mittel zur Regelung des Augenabstands die Translation jeder der Vorrichtungen gemäß einer Achse bewirken, die in der Ebene der Führungsmittel liegt.

## Claims

1. Optical device for night vision of a landscape, comprising a mixer (M_{E}) and means (IL) for forming an intensified visible image from an infrared image received, the device being characterized in that the mixer is situated along a first direction (33) in front of the eye (O) of the observer and transmits the visible light (33) directly to the observer, the device furthermore comprising:
• an objective (O_{IL}) receiving the infrared light (22) along a second direction (22), parallel to the first, the first and second directions defining a first plane (YOZ);
• optical means for guiding the light received by the objective to the mixer, the guidance being performed in a second plane, this second plane making an angle (α) different from 90° with the first plane, these optical guidance means comprising:
- optical means for returning the light received by the objective to the second plane;
- the means (IL) receiving the infrared light captured by the objective;
- a transport objective (O_{T1}, O_{T2}, O_{T3});
- a number n of mirrors (M₁, M₂, M₃, M₄), n depending on the number of objectives of the device;
- an eyepiece (O_{C});
the first direction (33) meeting the second plane in a first point (B) and the second direction (22) meeting the second plane in a second point (A), the line joining the first and second points being perpendicular to the first direction, the mixer reflecting the image arising from the eyepiece along the first direction, towards the eye of the observer.

2. Device according to Claim 1, characterized in that the said angle between the first and second planes is of the order of 110°.

3. Device according to one of the preceding claims, characterized in that the number n of mirrors is even.

4. Device according to one of the preceding claims, characterized in that the number n of mirrors is equal to four.

5. Device according to one of the preceding claims, characterized in that it furthermore comprises optical means (P) for returning the infrared light from the objective to the means for forming an intensified visible image.

6. Night vision goggles, characterized in that they comprise two devices according to one of the preceding claims, one device for each eye of the observer, and means (40) for adjusting the interocular distance.

7. Goggles according to Claim 6, characterized in that the means for adjusting the interocular distance translate each of the devices along an axis contained in the plane of the guidance means.
